# FASCICULE DE BREVET EUROPEEN

(11) **EP 3 036 481 B1**
(45) Date de publication et mention de la délivrance du brevet: **19.05.2021**
(21) Numéro de dépôt: 14786970.5
(22) Date de dépôt: 20.08.2014
(51) Int. Cl.: F23K 5/06, F02C 7/228, F02C 9/34, F23R 3/34

(54) **PROCÉDÉ ET SYSTÈME D'INJECTION DE CARBURANT DANS UNE CHAMBRE DE COMBUSTION D'UN MOTEUR**
VERFAHREN UND SYSTEM ZUR EINSPRITZUNG VON KRAFTSTOFF IN EINE BRENNKAMMER EINES MOTORS
METHOD AND SYSTEM FOR INJECTING FUEL INTO AN ENGINE COMBUSTION CHAMBER

(30) Priorité: 20.08.2013 FR 1358078; 03.09.2013 FR 1358422
(43) Date de publication de la demande: 29.06.2016
(73) Titulaire: Safran Aircraft Engines, 75015 Paris (FR)
(72) Inventeur: CHALAUD, Sébastien, 77550 Moissy-Cramayel Cedex (FR)
(74) Mandataire: Brevalex
(86) Numéro de dépôt international: PCT/FR2014/052105
(87) Numéro de publication internationale: WO 2015/025109

(56) Documents cités:
- EP-A2- 1 942 260
- US-A- 5 916 126
- US-A1- 2004 255 594
- US-A1- 2006 218 929

## Description

### DOMAINE TECHNIQUE

La présente invention concerne l'injection de carburant dans la chambre de combustion d'un moteur, notamment un moteur d'aéronef.

Elle concerne plus particulièrement l'alimentation en carburant d'injecteurs dans une chambre de combustion à faible émission d'oxydes d'azote Nox.

### ÉTAT DE LA TECHNIQUE ANTÉRIEURE

Pour réduire le taux d'émission des polluants, notamment des oxydes d'azote Nox, le carburant est injecté dans la chambre de combustion du moteur par l'intermédiaire de deux circuits d'injection. Un circuit appelé circuit pilote présente un débit permanent optimisé pour les bas régimes. Un circuit appelé circuit principal présente un débit intermittent optimisé pour les régimes élevés. Il complète le débit de carburant pour permettre notamment d'atteindre la puissance nécessaire au décollage. Le circuit principal est utilisé de manière non permanente, lorsqu'il y a besoin d'une poussée du moteur supplémentaire, et son débit peut être nul ou très faible à certains régimes.

Le fonctionnement par intermittence du circuit principal conjugué aux températures élevées régnant dans le moteur a pour conséquence d'induire une décomposition ou cokéfaction indésirable du carburant stagnant dans le circuit principal, lorsque le débit de carburant dans celui-ci est fortement réduit ou coupé.

Les documents EP 1 770 333 et EP 2 026 002 de la demanderesse présentent des injecteurs multipoint à deux circuits de carburant de ce type.

Pour supprimer ce risque de cokéfaction de carburant dans le circuit principal, il est connu de purger le circuit principal lorsqu'il est inutilisé.

Cependant, lorsque le circuit principal est utilisé à nouveau après une purge, le fonctionnement du circuit pilote et de l'ensemble du système d'injection de carburant peut être perturbé. En effet, le système d'alimentation, qui comporte un dispositif de régulation qui commande un doseur de carburant et une vanne de répartition de carburant entre les deux circuits, ouvre alors la vanne de répartition à la position commandée par la régulation correspondant à un régime souhaité. Une partie du débit de carburant est alors utilisé pour remplir le circuit principal et n'est donc pas injecté dans la chambre de combustion à cet instant.

Cela génère un sous-dosage temporaire de carburant pendant la phase de remplissage du circuit principal, un retard de réponse de ce dernier et un risque de dépassement de régime souhaité à la fin du remplissage du circuit principal Le document US5916126 concerne l'alimentation en carburant d'un moteur ayant un brûleur pilote et un brûleur principal. Le document US 2006/218929 concerne un système d'alimentation en carburant d'un moteur. Le document US 2004/0255594 concerne la régulation d'un moteur de turbine à gaz dont la chambre de combustion comporte une partie de combustion principale et une partie de combustion pilote.

### EXPOSÉ DE L'INVENTION

L'invention vise à résoudre les problèmes de la technique antérieure en fournissant un système d'injection de carburant dans une chambre de combustion d'un moteur, comportant au moins deux circuits de carburant, l'un à débit permanent et l'autre à débit intermittent, des organes de dosage et de répartition du carburant entre les deux circuits et un moyen de commande de ces organes, le système étant caractérisé en ce que le circuit à débit intermittent est configuré pour être purgé, et en ce que, sur réception d'un ordre de remplissage en carburant des circuits à la suite d'une purge du circuit à débit intermittent, le moyen de commande est adapté à
- commander les organes de dosage et de répartition pour obtenir un débit de carburant prédéterminé supérieur au débit correspondant à l'ordre de remplissage et fournir le surplus de carburant en résultant au circuit à débit intermittent, pendant une durée prédéterminée.

Grâce à l'invention, le débit de carburant injecté dans la chambre de combustion reste conforme au débit attendu pour un bon fonctionnement, en particulier il n'y a pas de sous-dosage de carburant dû au remplissage du circuit à débit intermittent. Il n'y a pas de retard de réponse du circuit à débit intermittent ni de dépassement de régime souhaité à la fin du remplissage du circuit à débit intermittent.

Selon un premier mode de réalisation de l'invention, les organes de dosage et de répartition du carburant comportent un doseur de carburant et une vanne de répartition de carburant, le doseur permettant de régler le débit de carburant fourni aux circuits à débit intermittent et à débit permanent, et la vanne de répartition permettant de répartir le carburant entre le circuit à débit intermittent et le circuit à débit permanent. Le doseur et la vanne de répartition sont reliés en série entre une pompe à carburant et les circuits d'injection.

Selon un second mode de réalisation de l'invention, les organes de dosage et de répartition du carburant comportent un doseur de carburant pour le circuit à débit permanent et un doseur de carburant pour le circuit à débit intermittent. Les deux doseurs sont alors reliés en parallèle entre la pompe à carburant et les circuits d'injection et assurent à la fois le dosage du carburant pour chacun des circuits et la répartition du carburant entre les deux circuits.

Selon une variante, le système d'injection de carburant est en outre caractérisé en ce que, sur réception d'une consigne de remplissage en carburant des circuits à la suite d'une purge du circuit à débit intermittent, le moyen de commande est adapté à
- comparer la valeur de consigne reçue à un seuil de consigne, et, si la valeur de la consigne est supérieure au seuil de consigne,
- commander les organes de dosage et de répartition pour remplir le circuit à débit intermittent préalablement à l'atteinte d'un seuil de poussée du moteur correspondant à une répartition prédéterminée de carburant entre le circuit à débit permanent et le circuit à débit intermittent.

L'invention apporte une solution robuste pour que la durée de remplissage en carburant du circuit à débit intermittent n'affecte pas l'accélération du moteur.

L'invention permet d'anticiper le besoin d'utilisation du circuit à débit intermittent tout en évitant de le remplir en carburant lorsque ce n'est pas nécessaire.

Ainsi, le circuit à débit intermittent reste à l'état purgé le plus longtemps possible, ce qui écarte le risque de cokéfaction du carburant stagnant.

Selon une caractéristique préférée, le moyen de commande est adapté à déterminer, pour un point donné du domaine de vol, le seuil de consigne en fonction du seuil de poussée du moteur.

Selon une caractéristique préférée, le moyen de commande est adapté à déterminer le seuil de poussée du moteur comme le point de poussée à partir duquel le circuit à débit intermittent est utilisé.

Selon une caractéristique préférée, le moyen de commande est adapté à déterminer la valeur de consigne en fonction de la position de la manette de commande des gaz actionnée par un utilisateur.

L'invention concerne aussi un procédé d'injection de carburant dans une chambre de combustion d'un moteur, par un système d'injection comportant au moins deux circuits de carburant, l'un à débit permanent et l'autre à débit intermittent, des organes de dosage et de répartition du carburant entre les deux circuits et un moyen de commande de ces organes, le procédé étant caractérisé en ce que le circuit à débit intermittent est configuré pour être purgé, et en ce que, sur réception d'un ordre de remplissage en carburant des circuits à la suite d'une purge du circuit à débit intermittent, il comporte l'étape de :
- commande des organes de dosage et de répartition pour obtenir un débit de carburant prédéterminé supérieur au débit correspondant à l'ordre de remplissage et fournir le surplus de carburant en résultant au circuit à débit intermittent, pendant une durée prédéterminée.

Selon une variante, le procédé d'injection de carburant est caractérisé en ce que, sur réception d'un consigne de remplissage en carburant des circuits à la suite d'une purge du circuit à débit intermittent, il comporte les étapes de :
- comparaison de la valeur de consigne reçue à un seuil de consigne, et, si la valeur de la consigne est supérieure au seuil de consigne,
- commande des organes de dosage et de répartition pour remplir le circuit à débit intermittent préalablement à l'atteinte d'un seuil de point de poussée correspondant à une répartition prédéterminée de carburant entre le circuit à débit permanent et le circuit à débit intermittent.

Le procédé présente des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### BRÈVE DESCRIPTION DES DESSINS

D'autres caractéristiques et avantages apparaîtront à la lecture de la description suivante de deux modes de réalisation préférés donnés à titre d'exemple non limitatif, décrits en référence aux figures dans lesquelles :
La figure 1 représente schématiquement un système d'injection de carburant dans une chambre de combustion d'un moteur, selon un premier mode de réalisation de l'invention,
La figure 2 représente schématiquement un système d'injection de carburant dans une chambre de combustion d'un moteur, selon un second mode de réalisation de l'invention,
La figure 3 représente un procédé d'injection de carburant dans une chambre de combustion d'un moteur, selon un mode de réalisation de l'invention,
Les figures 4a à 4f représentent des débits de carburant en différents points du système et une répartition de carburant entre les circuits d'injection, selon la présente invention,
La figure 5 représente un autre procédé d'injection de carburant dans une chambre de combustion d'un moteur, selon une variante de réalisation de l'invention,
La figure 6 représente un exemple de débit de carburant, en lien avec le procédé de la figure 5, selon la présente invention,
La figure 7 représente un exemple de consigne et de régime moteur, en lien avec le procédé de la figure 5, selon la présente invention.

### EXPOSÉ DÉTAILLÉ DE MODES DE RÉALISATION PARTICULIERS

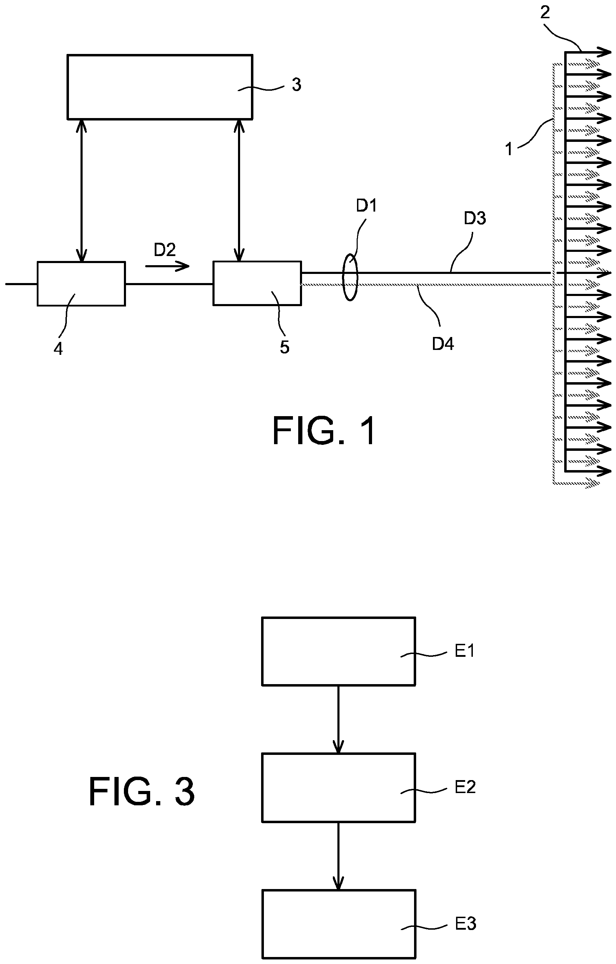

Selon un premier mode de réalisation préféré de l'invention représenté en référence à la **figure** 1, l'invention est appliquée à un système d'injection de carburant dans une chambre de combustion d'un moteur. On considère plus particulièrement le moteur d'un aéronef.

Seuls les éléments utiles à la compréhension de l'invention sont représentés et décrits.

Le système d'injection comporte deux circuits d'injection de carburant dans la chambre de combustion, non représentée.

Le premier circuit d'injection de carburant 1, dit circuit pilote ou encore circuit de ralenti, a un débit limité et permanent. Il comporte un ensemble de buses d'injection symbolisées par des flèches.

Le second circuit d'injection de carburant 2, dit circuit principal, est conçu pour compléter le débit de carburant jusqu'au point de plein gaz. Il permet notamment d'atteindre toute la puissance nécessaire au décollage. Ce circuit comporte lui aussi un ensemble de buses d'injection symbolisées par des flèches mais il n'est pas utilisé en permanence, son débit est par conséquent intermittent et peut être nul ou très faible à certains régimes.

Le fait de pouvoir utiliser deux circuits d'injection de carburant, dont un n'est pas utilisé en permanence, permet une meilleure homogénéité du mélange air/carburant et donc une meilleure combustion. Il y a donc réduction d'émission des polluants, et notamment des oxydes d'azote.

Un dispositif de régulation électronique 3 dit FADEC, d'après l'anglais « Full Authority Digital Engine Control », commande un organe 4 de dosage de carburant qui détermine le débit de carburant fourni aux deux circuits d'injection 1 et 2.

Le dispositif de régulation 3 commande également un organe 5 de répartition du carburant entre les deux circuits d'injection 1 et 2.

Ainsi, selon ce mode de réalisation, l'organe de dosage 4 est un doseur qui impose le débit de carburant qui est fourni à l'ensemble des deux circuits d'injection. L'organe de répartition 5 est une vanne de répartition qui répartit le carburant entre les deux circuits d'injection. Le doseur 4 et la vanne 5 sont reliés en série entre une pompe à carburant non représentée et les deux circuits d'injection 1 et 2. Le dosage de carburant est donc tout d'abord déterminé de manière globale pour les deux circuits puis la répartition du carburant entre les deux circuits est effectuée.

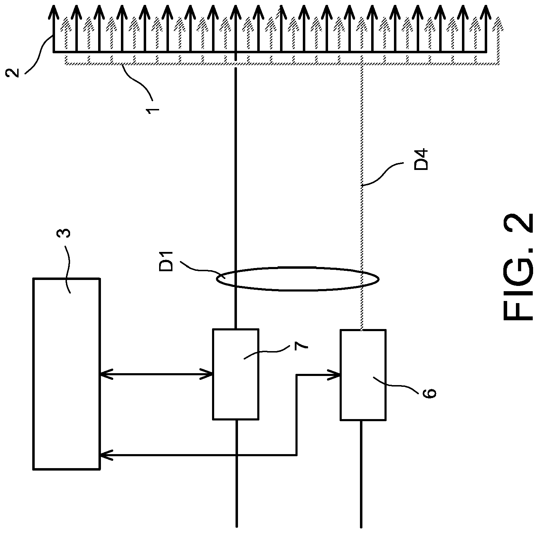

La **figure** 2 représente un second mode de réalisation de système d'injection de carburant. Ce second mode se différencie du premier par ses organes de dosage et de répartition de carburant.

Le système d'injection comporte deux circuits d'injection de carburant 1 et 2 similaires à ceux précédemment décrits. Il comporte également un dispositif de régulation 3 similaire à celui précédemment présenté. Il comporte des organes 6 et 7 de dosage et de répartition du carburant entre les deux circuits 1 et 2.

Dans ce mode de réalisation, l'organe de dosage et l'organe de répartition sont deux doseurs 6 et 7 commandés par le dispositif de régulation 3.

Ainsi, les doseurs 6 et 7 sont reliés en parallèle entre la pompe à carburant non représentée et les circuits d'injection 1 et 2, respectivement. Chaque doseur 6, 7 impose le débit de carburant fourni à son circuit d'injection respectif 1, 2 et le rapport des débits de carburant fournis aux circuits d'injection détermine la répartition entre les circuits d'injection. Chaque doseur est ainsi un organe de dosage et de répartition de carburant.

Pour éviter la cokéfaction du carburant dans les buses du circuit principal lorsqu'elles ne débitent pas de carburant dans la chambre de combustion, le circuit principal 2 est purgé. Cette purge est commandée par le dispositif de régulation électronique 3 et peut être effectuée de diverses manières.

Selon des variantes non représentées, les deux modes de réalisation de système d'injection de carburant peuvent comporter plus de deux circuits d'injection. Dans tous les cas, au moins un circuit d'injection de carburant peut être purgé.

La **figure 3** représente un procédé d'injection de carburant dans une chambre de combustion d'un moteur, mis en œuvre dans le premier mode de réalisation de dispositif précédemment décrit, plus particulièrement dans le dispositif de régulation électronique 3. Le procédé comporte des étapes E1 à E3.

L'étape E1 est la réception d'un ordre de remplissage en carburant des circuits d'injection, à la suite d'une purge du circuit à débit intermittent 2. On suppose que l'ordre de remplissage survient à un instant T1.

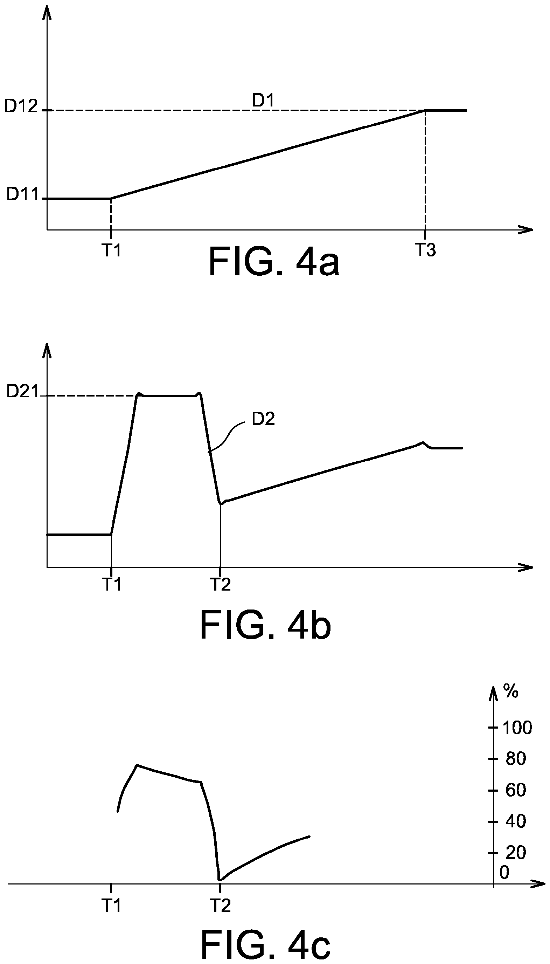

La **figure 4a** représente un exemple de débit total de carburant D1 délivré dans la chambre de combustion par les circuits d'injection, en fonction du temps, correspondant à l'ordre de remplissage reçu. Le débit total de carburant délivré dans la chambre de combustion est égal à une première valeur D11 relativement faible jusqu'à l'instant T1, puis il augmente jusqu'à une deuxième valeur D12 plus élevée que la première, entre les instants T1 et T3. Le débit D1 reste ensuite égal à la deuxième valeur D12. A titre d'exemple, la valeur D11 vaut 750 kg/h, la valeur D12 vaut 3000 kg/h et la durée T3-T1 vaut 7 secondes.

L'étape suivante E2 est la commande des organes 4 et 5 de dosage et de répartition pour obtenir en sortie de l'organe de dosage 4 un débit de carburant D2 prédéterminé qui est supérieur au débit D1 correspondant à l'ordre de remplissage pendant une durée prédéterminée, et fournir le surplus de carburant en résultant au circuit à débit intermittent 2, pendant la durée prédéterminée. Ce surplus de carburant, correspondant à la différence des débits D2-D1, sert à remplir le circuit principal 2.

La **figure 4b** représente le débit de carburant D2 délivré par le doseur 4, en fonction du temps. Entre les instants T1 et T2, le débit de carburant D2 délivré par le doseur est supérieur au débit total de carburant D1 délivré dans la chambre de combustion par les circuits d'injection, représenté à la figure 4a. Ainsi, entre les instant T1 et T2, le débit de carburant D2 atteint une valeur maximale D21 supérieure à la valeur du débit D1. L'instant T1 est l'instant où survient l'ordre de remplissage, comme précédemment exposé, et l'instant T2 est l'instant où le circuit principal 2 est rempli de carburant. L'instant T2 est antérieur à l'instant T3. Par exemple, la durée T2-T1 vaut 4 secondes et la valeur de débit D21 vaut 4500 kg/h.

La **figure 4c** représente la répartition de carburant affecté au circuit principal 2, en fonction du temps. Cette répartition est déterminée par la vanne de répartition 5 et est représentée en pourcentage.

Entre les instants T1 et T2, la répartition de carburant croit rapidement jusqu'à environ 80% pour le circuit principal 2, puis diminue jusqu'à une valeur proche de zéro. Cette répartition permet de remplir le circuit principal grâce au surplus de carburant délivré par le doseur 4.

La durée (T2-T1), la valeur de débit D2 entre les instants T1 et T2 ainsi que la répartition entre les deux circuits d'injection de carburant entre ces deux instants sont prédéterminées. Ces grandeurs dépendent de la constitution du circuit principal 2, notamment du volume à remplir de carburant.

Le circuit principal 2 est donc rempli de carburant grâce à la combinaison du surplus de débit de carburant en sortie du doseur 4 et de la répartition simultanée réalisée par la vanne de répartition 5 qui envoie le surplus de carburant vers le circuit principal 2. Le débit de carburant qui permet le remplissage du circuit principal est la différence entre le débit D2 délivré par le doseur et le débit D1 délivré dans la chambre de combustion.

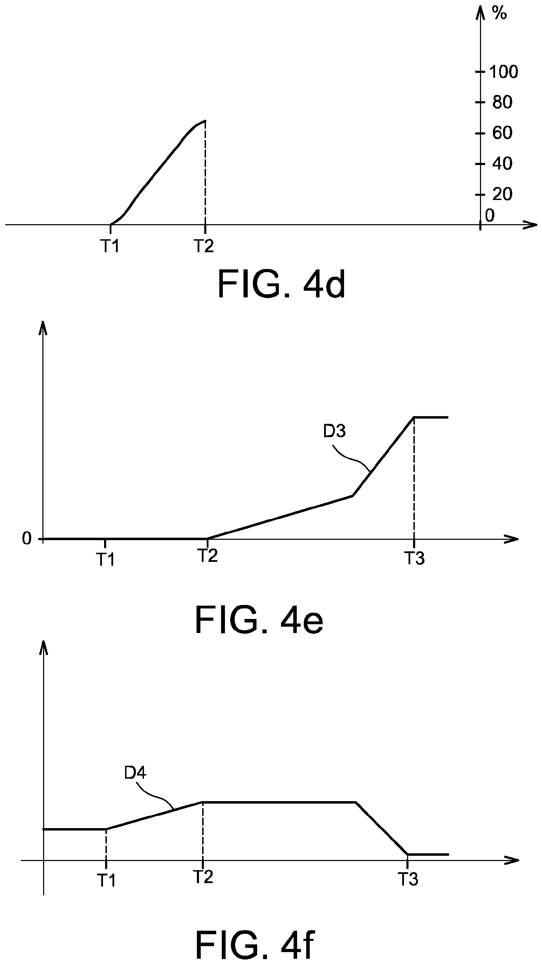

La **figure 4d** représente la courbe de remplissage en carburant du circuit principal 2, exprimée en pourcentage du volume du circuit principal, en fonction du temps.

A partir de l'instant T2, le circuit principal 2 est rempli de carburant. A cet instant, l'étape E3 est le retour à un mode de régulation classique dans lequel le débit de carburant D2 en sortie de doseur 4 est égal au débit de carburant D1 délivré dans la chambre de combustion, et dans lequel la vanne de répartition 5 est réglée pour que le débit D3 délivré par le circuit principal 2 augmente progressivement.

La **figure 4e** représente le débit D3 délivré par le circuit principal 2, en fonction du temps, tandis que la **figure 4f** représente le débit D4 délivré par le circuit pilote 1 en fonction du temps. Le débit D4 dans le circuit pilote est égal au débit total D1 entre les instants T1 et T2, puis il reste à une valeur palier pour enfin redescendre à une valeur faible. Le débit D3 est nul jusqu'à l'instant T2 puis augmente. A chaque instant, le débit D1 est égal à la somme des débits D3 et D4.

Dans le second mode de réalisation, les deux circuits d'injection de carburant sont alimentés en parallèle. Le débit total de carburant délivré dans la chambre de combustion est identique au débit total D1 représenté à la figure 4a. Le débit de carburant délivré par le circuit pilote 1 est identique au débit D4 représenté à la figure 4f.

Le débit de carburant fourni au circuit principal 2 est égal à la différence entre le débit D2 (figure 4b) et le débit D1 (figure 4a), entre les instants T1 et T2, puis et égal au débit D3 (figure 4e) à partir de l'instant T2.

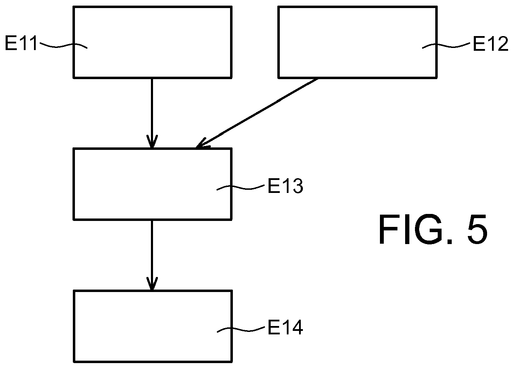

La **figure 5** représente un autre procédé d'injection de carburant dans une chambre de combustion d'un moteur, mis en œuvre dans le mode de réalisation de système précédemment décrit, plus particulièrement dans le dispositif de régulation électronique 3. Le procédé comporte des étapes E11 à E14.

L'étape E11 est la réception d'une consigne de remplissage en carburant des circuits d'injection, à la suite d'une purge du circuit à débit intermittent 2. On suppose que la consigne de remplissage survient à un instant T11.

La consigne de remplissage en carburant des circuits d'injection correspond à une consigne de poussée du moteur qui est déterminée par la position de la manette des gaz actionnée par un utilisateur.

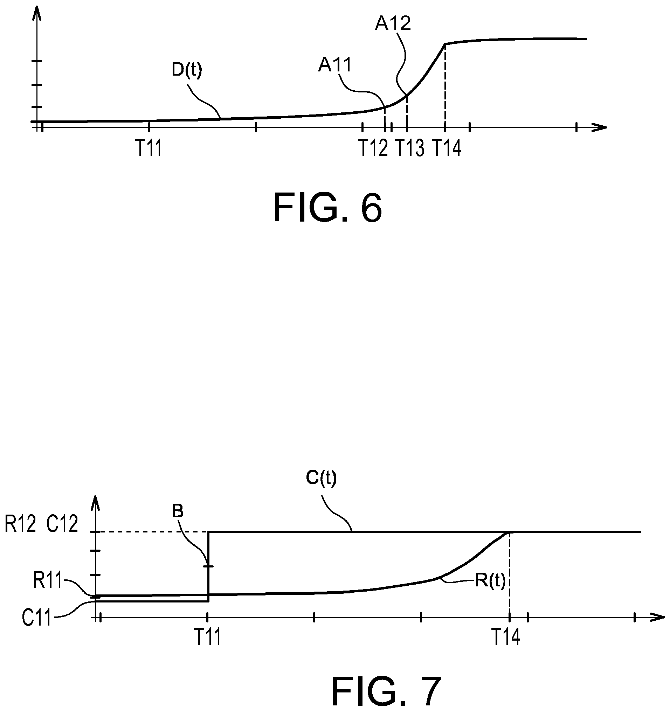

La **figure 6** représente un exemple de débit total de carburant D(t) délivré dans la chambre de combustion par les circuits d'injection 1 et 2, en fonction du temps, correspondant à la consigne de remplissage reçue. Le débit total de carburant délivré dans la chambre de combustion est égal à une première valeur D11 relativement faible jusqu'à l'instant T11 auquel la consigne de remplissage en carburant des circuits d'injection est reçue, puis il augmente jusqu'à une deuxième valeur D12 plus élevée que la première, entre les instants T11 et T14. Le débit D(t) reste ensuite égal à la deuxième valeur D12. A titre d'exemple, la valeur D11 vaut 750 kg/h, la valeur D12 vaut 3000 kg/h et la durée T14-T11 vaut 7 secondes.

Sur cette courbe, un seuil A11 de débit total de carburant est déterminé. Le seuil A11 est le débit correspondant à une répartition prédéterminée de carburant entre le circuit à débit permanent et le circuit à débit intermittent. Le seuil A11 de débit correspond à un seuil de poussée du moteur.

De préférence, le seuil A11 de débit est le débit à partir duquel le circuit à débit intermittent est utilisé. Pour un débit de carburant inférieur ou égal au seuil de débit, c'est-à-dire pour une poussée du moteur inférieure ou égale au seuil de poussée du moteur, seul le circuit à débit permanent 1 est sollicité. A partir du seuil de débit, c'est-à-dire du seuil de poussée, le circuit à débit intermittent 2 commence à être lui aussi sollicité.

Le seuil A11 de débit est atteint à un instant T12.

Il est à noter que le point de poussée correspondant au seuil A11 de débit se trouve à un niveau intermédiaire entre la poussée de ralenti sol et celle de décollage.

En variante, le seuil de débit, et donc le seuil de poussée du moteur, est choisi pour correspondre à une autre répartition prédéterminée de carburant entre le circuit à débit permanent et le circuit à débit intermittent. Dans tous les cas, cette autre répartition dépend de l'utilisation du circuit à débit intermittent.

Le débit A12 est le débit maximal pouvant passer dans le circuit à débit permanent. Le débit A12 est atteint à un instant T13 supérieur à T12. La durée (T13-T12) vaut par exemple 0.6 secondes.

Selon la technique antérieure, le circuit à débit intermittent, qui a été préalablement purgé, reste vide jusqu'à l'instant T12 où il commence à être sollicité. Le circuit à débit intermittent doit tout d'abord être rempli avant de pourvoir délivrer du carburant dans la chambre de combustion. Or le remplissage du circuit à débit intermittent dure un temps minimum qui est supérieur à la durée (T13-T12). Par exemple, la durée de remplissage du circuit à débit intermittent est de 2 secondes. Le circuit à débit intermittent ne devient fonctionnel qu'à l'issue de son remplissage en carburant.

Il existe donc selon la technique antérieure un laps de temps à partir de l'instant T13 au cours duquel le débit du carburant injecté dans la chambre de combustion est plafonné à la valeur A12 atteinte à cet instant.

L'étape E12 est la détermination d'un seuil de consigne B par le dispositif de régulation électronique 3.

Pour un point donné du domaine de vol, le seuil de consigne est déterminé en fonction du seuil de poussée du moteur, c'est-à-dire le seuil A11 de débit, correspondant à la répartition prédéterminée de carburant entre le circuit à débit permanent et le circuit à débit intermittent. On rappelle que le seuil A11 de débit est de préférence le débit à partir duquel le circuit à débit intermittent est utilisé.

En un point du domaine de vol donné, le seuil de consigne est la valeur de consigne permettant d'atteindre la valeur de poussée égale au seuil de poussée.

Le seuil de consigne B évolue en fonction du point du domaine de vol de l'aéronef, c'est pourquoi il est calculé en permanence par le dispositif de régulation 3.

L'étape E11 est suivie par l'étape E13 qui est la comparaison de la valeur de consigne reçue au seuil de consigne B courant fourni par l'étape E12.

Si la valeur de consigne reçue est inférieure au seuil de consigne B, alors le dispositif de régulation électronique 3 commande le doseur et la vanne de répartition de manière classique.

Si la valeur de consigne reçue est supérieure au seuil de consigne B, alors l'étape E13 est suivie par l'étape E14 qui est la commande des organes 4, 5 de dosage et de répartition pour remplir le circuit à débit intermittent 2 préalablement à l'atteinte du seuil de point de poussée. En d'autres termes, le franchissement du seuil de poussée du moteur, c'est-à-dire du seuil de débit A11, est anticipé. Le circuit à débit intermittent est donc rempli de carburant en avance par rapport à l'instant de son utilisation effective.

Ainsi, le remplissage du circuit à débit intermittent commence à l'instant T11, ou en variante à un instant compris entre les instants T11 et (T12-DR), où DR est la durée de remplissage du circuit à débit intermittent 2, de sorte que le circuit à débit intermittent est rempli de carburant et prêt à délivrer du carburant dans la chambre de combustion à l'instant T12 où il est sollicité.

La **figure 7** représente le régime moteur et la consigne appliquée correspondant à l'exemple de la figure 6, en fonction du temps. Le régime moteur est proportionnel à la poussée du moteur.

A l'instant T11, la manette des gaz est manœuvrée pour appliquer une consigne. La courbe C(t) de consigne est égale à une première valeur C11 jusqu'à l'instant T11, puis à cet instant prend une seconde valeur C12. La valeur C12 est supérieure au seuil de consigne B.

Le régime moteur est égal à une première valeur R11 relativement faible jusqu'à l'instant T11 auquel la consigne de remplissage en carburant des circuits d'injection est reçue, puis il augmente jusqu'à une deuxième valeur R12 plus élevée que la première, entre les instants T11 et T14. Le régime moteur reste ensuite égal à la deuxième valeur R12. A titre d'exemple, la valeur R11 vaut 2000 RPM, la valeur R12 vaut 7000 RPM et la durée T14-T11 vaut 7 secondes.

## Revendications

1. Système d'injection de carburant dans une chambre de combustion d'un moteur, comportant au moins deux circuits de carburant, l'un à débit permanent (1) et l'autre à débit intermittent (2), des organes (4, 5, 6, 7) de dosage et de répartition du carburant entre les deux circuits et un moyen de commande (3) de ces organes, le système étant **caractérisé en ce que** le circuit à débit intermittent est configuré pour être purgé, et **en ce que**, sur réception d'un ordre de remplissage en carburant des circuits à la suite d'une purge du circuit à débit intermittent, le moyen de commande (3) est adapté à
- commander les organes (4, 5, 6, 7) de dosage et de répartition pour obtenir un débit de carburant prédéterminé supérieur au débit correspondant à l'ordre de remplissage et fournir le surplus de carburant en résultant au circuit à débit intermittent, pendant une durée prédéterminée.

2. Système d'injection de carburant selon la revendication 1, **caractérisé en ce que** les organes de dosage et de répartition du carburant comportent un doseur (4) de carburant et une vanne de répartition (5) de carburant, le doseur permettant de régler le débit de carburant fourni aux circuits à débit intermittent et à débit permanent, et la vanne de répartition permettant de répartir le carburant entre le circuit à débit intermittent et le circuit à débit permanent.

3. Système d'injection de carburant selon la revendication 1, **caractérisé en ce que** les organes de dosage et de répartition du carburant comportent un doseur (6) de carburant pour le circuit à débit permanent et un doseur (7) de carburant pour le circuit à débit intermittent.

4. Système d'injection de carburant selon l'une quelconque des revendications 1 à 3,
**caractérisé en ce que**, sur réception d'une consigne de remplissage en carburant des circuits à la suite d'une purge du circuit à débit intermittent, le moyen de commande (3) est adapté à
- comparer la valeur de consigne reçue à un seuil de consigne, et, si la valeur de la consigne est supérieure au seuil de consigne,
- commander les organes (4, 5) de dosage et de répartition pour remplir le circuit à débit intermittent (2) préalablement à l'atteinte d'un seuil de poussée du moteur correspondant à une répartition prédéterminée de carburant entre le circuit à débit permanent et le circuit à débit intermittent.

5. Système d'injection de carburant selon la revendication 4, **caractérisé en ce que** le moyen de commande (3) est adapté à déterminer, pour un point donné du domaine de vol, le seuil de consigne en fonction du seuil de poussée du moteur.

6. Système d'injection de carburant selon la revendication 4 ou 5, **caractérisé en ce que** le moyen de commande (3) est adapté à déterminer le seuil de poussée du moteur comme le point de poussée à partir duquel le circuit à débit intermittent est utilisé.

7. Système d'injection de carburant selon l'une quelconque des revendications 4 à 6, **caractérisé en ce que** le moyen de commande (3) est adapté à déterminer la valeur de consigne en fonction de la position de la manette de commande des gaz actionnée par un utilisateur.

8. Procédé d'injection de carburant dans une chambre de combustion d'un moteur, par un système d'injection comportant au moins deux circuits de carburant, l'un à débit permanent et l'autre à débit intermittent, des organes de dosage et de répartition du carburant entre les deux circuits et un moyen de commande de ces organes, le procédé étant **caractérisé en ce que** le circuit à débit intermittent est configuré pour être purgé, et **en ce que**, sur réception (E1) d'un ordre de remplissage en carburant des circuits à la suite d'une purge du circuit à débit intermittent, il comporte l'étape de :
- commande (E2) des organes de dosage et de répartition pour obtenir un débit de carburant prédéterminé supérieur au débit correspondant à l'ordre de remplissage et fournir le surplus de carburant en résultant au circuit à débit intermittent, pendant une durée prédéterminée.

9. Procédé d'injection de carburant selon la revendication 8,
**caractérisé en ce que**, sur réception (E11) d'un consigne de remplissage en carburant des circuits à la suite d'une purge du circuit à débit intermittent, il comporte les étapes de :
- comparaison de la valeur de consigne reçue à un seuil de consigne, et, si la valeur de la consigne est supérieure au seuil de consigne,
- commande des organes (4, 5) de dosage et de répartition pour remplir le circuit à débit intermittent (2) préalablement à l'atteinte d'un seuil de point de poussée correspondant à une répartition prédéterminée de carburant entre le circuit à débit permanent et le circuit à débit intermittent.

10. Programme d'ordinateur comportant des instructions pour l'exécution du procédé selon la revendication 8 ou 9 lorsque ledit programme est exécuté par un ordinateur.

11. Support d'enregistrement lisible par un ordinateur sur lequel est enregistré un programme d'ordinateur comprenant des instructions pour l'exécution du procédé selon la revendication 8 ou 9.

## Patentansprüche

1. System zur Einspritzung von Kraftstoff in eine Brennkammer eines Motors, das mindestens zwei Kraftstoffkreisläufe - einen mit durchgehender Zuführung (1) und einen anderen mit intermittierender Zuführung (2) -, Vorrichtungen (4, 5, 6, 7) zur Dosierung und Verteilung des Kraftstoffs auf die beiden Kreisläufe sowie ein Mittel zur Steuerung (3) dieser Vorrichtungen umfasst, wobei das System **dadurch gekennzeichnet ist, dass** der Kreislauf mit intermittierender Zuführung dafür konfiguriert ist, entleert zu werden,
und dassi das Mittel zur Steuerung (3) bei Erhalt einer Anweisung zur Befüllung der Kreisläufe mit Kraftstoff nach einer Entleerung des Kreislaufs mit intermittierender Zuführung dafür geeignet ist,
- die Vorrichtungen (4, 5, 6, 7) zur Dosierung und Verteilung so zu steuern, dass während einer vordefinierten Dauer eine vordefinierte Kraftstoffmenge, die größer ist als die der Befüllungsanweisung entsprechende Menge, erhalten wird und der sich daraus ergebende überschüssige Kraftstoff dem Kreislauf mit intermittierender Zuführung zugeführt wird.

2. System zur Einspritzung von Kraftstoff gemäß Anspruch 1, **dadurch gekennzeichnet, dass** die Vorrichtungen zur Dosierung und Verteilung des Kraftstoffs eine Dosiereinheit (4) für Kraftstoff und ein Verteilventil (5) für Kraftstoff umfassen, wobei mit der Dosiereinheit die Kraftstoffmenge gesteuert werden kann, die den Kreisläufen mit intermittierender und mit durchgehender Zuführung zugeführt wird, und mit dem Verteilventil der Kraftstoff auf den Kreislauf mit intermittierender Zuführung und den Kreislauf mit durchgehender Zuführung aufgeteilt werden kann.

3. System zur Einspritzung von Kraftstoff gemäß Anspruch 1, **dadurch gekennzeichnet, dass** die Vorrichtungen zur Dosierung und Verteilung des Kraftstoffs eine Dosiereinheit (6) für Kraftstoff für den Kreislauf mit durchgehender Zuführung und eine Dosiereinheit (7) für Kraftstoff für den Kreislauf mit intermittierender Zuführung beinhalten.

4. System zur Einspritzung von Kraftstoff gemäß einem der Ansprüche 1 bis 3,
**dadurch gekennzeichnet, dass** das Mittel zur Steuerung (3) bei Erhalt eines Sollfüllstands der Kreisläufe mit Kraftstoff nach einer Entleerung des Kreislaufs mit intermittierender Zuführung dafür geeignet ist,
- den erhaltenen Sollwert mit einer Sollschwelle zu vergleichen und, wenn der Sollwert größer ist als die Sollschwelle,
- die Vorrichtungen (4, 5) zur Dosierung und Verteilung so zu steuern, dass der Kreislauf mit intermittierender Zuführung (2) vor dem Erreichen einer Schwelle des Schubs des Motors entsprechend einer vordefinierten Aufteilung des Kraftstoffs auf den Kreislauf mit durchgehender Zuführung und den Kreislauf mit intermittierender Zuführung befüllt wird.

5. System zur Einspritzung von Kraftstoff gemäß Anspruch 4, **dadurch gekennzeichnet, dass** das Mittel zur Steuerung (3) dafür geeignet ist, für einen gegebenen Punkt des Flugbetriebs die Sollschwelle in Abhängigkeit von der Schubschwelle des Motors zu bestimmen.

6. System zur Einspritzung von Kraftstoff gemäß Anspruch 4 oder 5, **dadurch gekennzeichnet, dass** das Mittel zur Steuerung (3) dafür geeignet ist, die Schubschwelle des Motors als den Schubpunkt zu bestimmen, ab dem der Kreislauf mit intermittierender Zuführung verwendet wird.

7. System zur Einspritzung von Kraftstoff gemäß einem der vorstehenden Ansprüche 4 bis 6, **dadurch gekennzeichnet, dass** das Mittel zur Steuerung (3) dafür geeignet ist, den Sollwert in Abhängigkeit von der Stellung des von einem Anwender betätigten Gassteuerhebels zu bestimmen.

8. Verfahren zur Einspritzung von Kraftstoff in eine Brennkammer eines Motors mittels eines Einspritzsystems, das mindestens zwei Kraftstoffkreisläufe - einen mit durchgehender Zuführung und einen anderen mit intermittierender Zuführung -, Vorrichtungen zur Dosierung und Verteilung des Kraftstoffs auf die beiden Kreisläufe sowie ein Mittel zur Steuerung dieser Vorrichtungen umfasst, wobei das Verfahren **dadurch gekennzeichnet ist, dass** der Kreislauf mit intermittierender Zuführung dafür konfiguriert ist, entleert zu werden, und
dass es bei Erhalt (E1) einer Anweisung zur Befüllung der Kreisläufe mit Kraftstoff nach einer Entleerung des Kreislaufs mit intermittierender Zuführung den folgenden Schritt umfasst:
- Ansteuerung (E2) der Vorrichtungen zur Dosierung und Verteilung, sodass während einer vordefinierten Dauer eine vordefinierte Kraftstoffmenge, die größer ist als die der Befüllungsanweisung entsprechende Menge, erhalten wird und der sich daraus ergebende überschüssige Kraftstoff dem Kreislauf mit intermittierender Zuführung zugeführt wird.

9. Verfahren zur Einspritzung von Kraftstoff gemäß Anspruch 8,
**dadurch gekennzeichnet, dass** es bei Erhalt (E11) eines Sollfüllstands der Kreisläufe mit Kraftstoff nach einer Entleerung des Kreislaufs mit intermittierender Zuführung die folgenden Schritte umfasst:
- Vergleich des erhaltenen Sollwerts mit einer Sollschwelle und, wenn der Sollwert größer ist als die Sollschwelle,
- Ansteuerung der Vorrichtungen (4, 5) zur Dosierung und Verteilung, sodass der Kreislauf mit intermittierender Zuführung (2) vor dem Erreichen einer Schwelle des Schubpunkts des Motors entsprechend einer vordefinierten Aufteilung des Kraftstoffs auf den Kreislauf mit durchgehender Zuführung und den Kreislauf mit intermittierender Zuführung befüllt wird.

10. Computerprogramm, das Anweisungen für die Ausführung des Verfahrens gemäß Anspruch 8 oder 9 umfasst, sofern dieses Programm von einem Computer ausgeführt wird.

11. Aufzeichnungsmedium, das von einem Computer ausgelesen werden kann und auf dem ein Computerprogramm gespeichert wird, welches Anweisungen für die Ausführung des Verfahrens gemäß Anspruch 8 oder 9 umfasst.

## Claims

1. System of injecting fuel into a combustion chamber of an engine, comprising at least two fuel circuits, one permanent flow circuit (1) and one intermittent flow circuit (2), members (4, 5, 6, 7) for metering and distributing fuel between the two circuits and a means (3) of controlling these members, the system being **characterised in that** the intermittent flow circuit is configured for being purged, and **in that** when an order to fill circuits with fuel is received after a purge of the intermittent flow circuit, the control means (3) is adapted to
- control the members for metering and distributing (4, 5, 6, 7) to obtain a predetermined fuel flow higher than the flow corresponding to the filling order and to supply the resulting surplus of fuel to the intermittent flow circuit for a predetermined duration.

2. Fuel injection system according to claim 1, **characterised in that** the members for fuel metering and distributing comprise a fuel metering device (4) and a fuel distribution valve (5), the metering device being designed to adjust the fuel flow output to the intermittent and permanent flow circuits, and the distribution valve being capable of distributing fuel between the intermittent flow circuit and the permanent flow circuit.

3. Fuel injection system according to claim 1, **characterised in that** the members for fuel metering and distributing comprise a fuel metering device (6) for the permanent flow circuit and a fuel metering device (7) for the intermittent flow circuit.

4. Fuel injection system according to any one of claims 1 to 3, **characterised in that**, following the reception of an order to fill circuits with fuel after a purge of the intermittent flow circuit, the control means (3) is adapted to
- compare the received set value with a set threshold and if the set value is higher than the set threshold,
- control the members for metering and distributing (4, 5) to fill the intermittent flow circuit (2) before reaching an engine thrust threshold corresponding to a predetermined fuel distribution between the permanent flow circuit and the intermittent flow circuit.

5. Fuel injection system according to claim 4, **characterised in that** the control means (3) is adapted to determine the set threshold as a function of the engine thrust threshold, for a given point in the flight envelope.

6. Fuel injection system according to claim 4 or 5, **characterised in that** the control means (3) is adapted to determine the engine thrust threshold as being the thrust point starting from which the intermittent flow circuit is used.

7. Fuel injection system according to any one of claims 4 to 6, **characterised in that** the control means (3) is adapted to determine the set value as a function of the position of the throttle control lever actuated by a user.

8. Method of injecting fuel into a combustion chamber of an engine, through an injection system comprising at least two fuel circuits, one permanent flow circuit and one intermittent flow circuit, members for fuel metering and distributing for metering and distributing fuel between the two circuits and a control means for these members, the method being **characterised in that** the intermittent flow circuit is configured for being purged, and **in that**, following reception (E1) of an order to fill the circuits with fuel after a purge of the intermittent flow circuit, it comprises the step to:
- control (E2) the members for metering and distributing to obtain a predetermined fuel flow higher than the flow corresponding to the filling order and to supply the resulting surplus fuel to the intermittent flow circuit, for a predetermined duration.

9. Fuel injection method according to claim 8,
**characterised in that**, when an order to fill the circuits with fuel is received after a purge of the intermittent flow circuit (E11), it includes steps to:
- compare the received set value with a set threshold, and if the set value is higher than the set threshold,
- control the members for metering and distributing (4, 5) to fill the intermittent flow circuit (2) before reaching a thrust point threshold corresponding to a predetermined distribution of fuel between the permanent flow circuit and the intermittent flow circuit.

10. Computer program including instructions for implementing the method according to claim 8 or 9 when said program is run by a computer.

11. Storage medium that can be read by a computer on which a computer program comprising instructions adapted to run the method according to claim 8 or 9, is stored.
